# EUROPÄISCHE PATENTANMELDUNG

(11) **EP 4 614 259 A1**
(43) Veröffentlichungstag der Anmeldung: **10.09.2025**
(21) Anmeldenummer: 24162363.6
(22) Anmeldetag: 08.03.2024
(51) Int. Cl.: G05B 19/418, G05B 19/048

(54) **VERFAHREN UND SYSTEM ZUM AUTOMATISCHEN BELADEN UND/ODER ENTLADEN EINER AUTOMATISIERTEN BEARBEITUNGS- UND/ODER FERTIGUNGSANLAGE MITTELS EINER AUTOMATIONSEINHEIT**

(71) Anmelder: Hoffmann Engineering Services GmbH, 81241 München (DE)
(72) Erfinder: EDER, Thomas, 81245 München (DE); KELLERMEIER, Tobias, 80339 München (DE); FEICHTINGER, Michael, 86579 Waidhofen (DE)
(74) Vertreter: Seemann & Partner Patentanwälte mbB

(57) **Zusammenfassung**

Die Erfindung betrifft ein Verfahren und ein System (1) zum automatischen Beladen und/oder Entladen einer Bearbeitungs- und/oder Fertigungsanlage (2) mittels einer Automationseinheit (3). Die Bearbeitungs- und/oder Fertigungsanlage (2) umfasst eine Hauptzugangstür (23) zur manuellen Beladung der Bearbeitungs- und/oder Fertigungsanlage (2). Die Bearbeitungs- und/oder Fertigungsanlage (2) und die Automationseinheit (3) sind so zueinander angeordnet, dass die Bearbeitungs- und/oder Fertigungsanlage (2) durch ein verschließbares Beladefenster (10) hindurch von der Automationseinheit (3) beladbar und entladbar ist. Die Bearbeitungs- und/oder Fertigungsanlage (2) ist dazu eingerichtet, ein externes Startsignal auszulösen und an die Automationseinheit (3) zu übermitteln. Die Automationseinheit (3) ist dazu eingerichtet, das Beladefenster (10) zu öffnen, einen Türschalter der Hauptzugangstür (23) der Bearbeitungs- und/oder Fertigungsanlage (2) zu unterbrechen, einen Belade- und/oder Entladevorgang der Bearbeitungs- und/oder Fertigungsanlage (2) durch das Beladefenster (10) mittels einer Ladeeinheit (30) der Automationseinheit (3) durchzuführen, das Beladefenster (10) wieder zu schließen und den Türschalter der Hauptzugangstür (23) der Bearbeitungs- und/oder Fertigungsanlage (2) wieder zu schließen.

## Beschreibung

Die Erfindung betrifft ein Verfahren zum automatischen Beladen und/oder Entladen einer automatisierten Bearbeitungs- und/oder Fertigungsanlage mittels einer Automationseinheit, wobei die Bearbeitungs- und/oder Fertigungsanlage eine Hauptzugangstür zur manuellen Beladung der Bearbeitungs- und/oder Fertigungsanlage umfasst, wobei die Bearbeitungs- und/oder Fertigungsanlage und die Automationseinheit so zueinander angeordnet sind, dass die Bearbeitungs- und/oder Fertigungsanlage durch ein Beladefenster hindurch von der Automationseinheit beladbar und entladbar ist. Zudem betrifft die Erfindung ein System zum automatischen Beladen und/oder Entladen einer automatisierten Bearbeitungs- und/oder Fertigungsanlage mittels einer Automationseinheit.

Automatisierte Bearbeitungs- und/oder Fertigungsanlage, z.B. Werkzeugmaschinen, zu denen auch CNC-Maschinen gehören, sind Maschinen zur Fertigung und/oder Bearbeitung von Werkstücken mittels Werkzeugen, die von der Bearbeitungs- und/oder Fertigungsanlage gesteuert werden. CNC-Maschinen umfassen in der Regel eine Steuerungstechnik, zum Beispiel eine Steuerungsvorrichtung, mittels der die CNC-Maschine in der Lage ist, die Werkzeuge mit sehr hoher Präzision anzusteuern um die Werkstücke herzustellen und/oder zu bearbeiten. Unter dem Begriff automatisierte Bearbeitungs- und/oder Fertigungsanlage sind neben Werkzeugmaschinen auch automatisierte Fertigungszellen und/oder Montagezellen zu verstehen, in denen beispielsweise Klebevorgänge, Schweißvorgänge, Fräsvorgänge oder ähnliche Prozessschritte durchgeführt werden.

Sollen mehrere Werkstücke hintereinander hergestellt werden, ist es notwendig, das in einem ersten Bearbeitungsprozess hergestellte Werkstück aus der Bearbeitungs- und/oder Fertigungsanlage zu entnehmen und Materialien für einen nächsten Bearbeitungsprozess der Bearbeitungs- und/oder Fertigungsanlage zuzuführen, damit ein nächstes Werkstück hergestellt und/oder bearbeitet werden kann. Das Be- und Entladen erfolgt vielfach durch eine Hauptzugangstür der Bearbeitungs- und/oder Fertigungsanlage, durch die ein Nutzer bzw. Werker Zugriff auf einen Innenraum der Bearbeitungs- und/oder Fertigungsanlage hat, um den Ladevorgang durchzuführen. Soll jedoch eine Vielzahl von Werkstücken hergestellt werden, ist ein solch manueller Ladeprozess zeit- und personalaufwändig. Aus diesem Grund kommen vielfach sogenannte Automationseinheiten zum Einsatz, welche das Beladen und/oder Entladen der Bearbeitungs- und/oder Fertigungsanlage automatisch durchführen. Dazu verfügen Automationseinheiten in der Regel über Ladeeinheiten, beispielsweise Roboter, Manipulatoren oder ähnliche Vorrichtungen, die das fertige Werkstück entnehmen und die zu bearbeitenden Materialien, Roh- oder Halbzeuge der Bearbeitungs- und/oder Fertigungsanlage zuführen.

Bei dem Einsatz einer solchen Automationseinheit besteht jedoch die Gefahr, dass der Nutzer, der gerade durch die Hauptzugangstür in den Innenraum greift, durch die Ladeeinheit verletzt wird. Zudem kann es zu einer Beschädigung der Bearbeitungs- und/oder Fertigungsanlage und der Ladeeinheit kommen, wenn der Bearbeitungsprozess gestartet wird, während die Bearbeitungs- und/oder Fertigungsanlage gerade mittels der Ladeeinheit beladen oder entladen wird. Durch eine Verknüpfung von Steuerungsvorrichtungen der Bearbeitungs- und/oder Fertigungsanlage und der Automationseinheit können diese miteinander kommunizieren, um beispielsweise ein Starten des Bearbeitungsprozesses während des Ladevorgangs zu verhindern. Jedoch ist eine solche Verknüpfung der Steuerungsvorrichtungen aufwändig und kostenintensiv.

Es ist die Aufgabe der vorliegenden Erfindung, die Sicherheit bei dem automatisierten Beladen und/oder Entladen einer Bearbeitungs- und/oder Fertigungsanlage zu verbessern.

Diese Aufgabe wird gelöst durch ein Verfahren zum automatischen Beladen und/oder Entladen einer automatisierten Bearbeitungs- und/oder Fertigungsanlage mittels einer Automationseinheit, wobei die Bearbeitungs- und/oder Fertigungsanlage eine Hauptzugangstür zur manuellen Beladung der Bearbeitungs- und/oder Fertigungsanlage umfasst, wobei die Bearbeitungs- und/oder Fertigungsanlage und die Automationseinheit so zueinander angeordnet sind, dass die Bearbeitungs- und/oder Fertigungsanlage durch ein Beladefenster hindurch von der Automationseinheit beladbar und entladbar ist, wobei das Verfahren folgende Schritte umfasst:
- Auslösen eines externen Startsignals durch die Bearbeitungs- und/oder Fertigungsanlage und Übermitteln des externen Startsignals an die Automationseinheit,
- Unterbrechen eines Türschalters der Hauptzugangstür der Bearbeitungs- und/oder Fertigungsanlage durch die Automationseinheit,
- Durchführen eines Belade- und/oder Entladevorgangs der Bearbeitungs- und/oder Fertigungsanlage durch das Beladefenster hindurch mittels einer Ladeeinheit der Automationseinheit,
- Schließen des Türschalters der Hauptzugangstür der Bearbeitungs- und/oder Fertigungsanlage durch die Automationseinheit.

Erfindungsgemäß löst die Bearbeitungs- und/oder Fertigungsanlage das externe Startsignal aus, das anschließend an die Automationseinheit übermittelt wird. Anschließend führt lediglich die Automationseinheit die nachfolgenden Schritte des Unterbrechens des Türschalters, des Durchführens des Ladevorgangs und des Schließens des Türschalters durch. Auf diese Weise kann auf eine komplexe Kommunikation zwischen Bearbeitungs- und/oder Fertigungsanlage und Automationseinheit verzichtet werden. Insbesondere wird lediglich das externe Startsignal in eine Richtung von der Bearbeitungs- und/oder Fertigungsanlage zur Automationseinheit übermittelt.

Gleichzeitig wird durch das Unterbrechen des Türschalters der Hauptzugangstür erreicht, dass eine integrierte Sicherheitsschaltung der Bearbeitungs- und/oder Fertigungsanlage aktiviert wird. Der Türschalter wird in der Regel durch Öffnen der Hauptzugangstür unterbrochen. Diese integrierte Sicherheitsschaltung sorgt im Regelfall dafür, dass die Bearbeitungs- und/oder Fertigungsanlage keinen Bearbeitungsprozess starten kann, solange die Hauptzugangstür geöffnet ist, um einen Benutzer der Bearbeitungs- und/oder Fertigungsanlage vor Verletzungen zu schützen Das vorliegende Verfahren nutzt dies aus, indem die Automationseinheit den Türschalter der Hauptzugangstür unterbricht, um damit zu verhindern, dass ein Bearbeitungsprozess der Bearbeitungs- und/oder Fertigungsanlage gestartet wird, während ein Ladevorgang mittels der Ladeeinheit durchgeführt wird. Auf diese Weise wird eine Beschädigung der Ladeeinheit und/oder der Bearbeitungs- und/oder Fertigungsanlage verhindert.

Das externe Startsignal heißt extern, da es von der Bearbeitungs- und/oder Fertigungsanlage an die extern ausgebildete Automationseinheit übermittelt wird. Indem das externe Startsignal ausgelöst wird, wird das externe Startsignal erzeugt. Anschließend wird das externe Startsignal an die Automationseinheit übermittelt. Das externe Startsignal wird insbesondere kabellos oder kabelgebunden an die Automationseinheit übermittelt.

Lediglich das externe Startsignal wird insbesondere von der Bearbeitungs- und/oder Fertigungsanlage ausgelöst bzw. erzeugt. Die anschließenden Schritte erfolgen durch die Automationseinheit, so dass auf eine Kommunikation zwischen den Steuervorrichtungen der Bearbeitungs- und/oder Fertigungsanlage und der Automationseinheit während des Verfahrens verzichtet werden kann.

Die Automationseinheit umfasst insbesondere eine Zugangstür der Automationseinheit, die einen manuellen Zugriff auf einen Innenraum der Automationseinheit ermöglicht. Ferner umfasst die Automationseinheit insbesondere eine Steuervorrichtung, beispielsweise einen Computer oder eine ähnliche Datenverarbeitungsvorrichtung. Die Steuervorrichtung ist insbesondere dazu ausgebildet, die von der Automationseinheit durchgeführten Schritte auszuführen, indem insbesondere die entsprechenden Komponenten angesteuert werden. Auch die Bearbeitungs- und/oder Fertigungsanlage umfasst insbesondere eine Steuerungsvorrichtung. Insbesondere besteht zwischen der Steuervorrichtung der Bearbeitungs- und/oder Fertigungsanlage und der Steuerung der Automationseinheit keine Datenverbindung.

Die Ladeeinheit der Automationseinheit ist insbesondere dazu ausgebildet, automatisch Werkstücke, Paletten, Schraubstöcke, Werkstückträger oder ähnliche Vorrichtungen aus der Bearbeitungs- und/oder Fertigungsanlage zu entnehmen und neue Werkstücke und/oder Material der Bearbeitungs- und/oder Fertigungsanlage zuzuführen. Dies geschieht durch das Beladefenster. Die Ladeeinheit ist insbesondere ein Roboter, wenigstens ein Manipulator oder eine ähnliche automatisierte Ladevorrichtung.

Die Bearbeitungs- und/oder Fertigungsanlage umfasst insbesondere eine Werkzeugvorrichtung mit wenigstens einem Bearbeitungswerkzeug zum Bearbeiten von Werkstücken. Zudem umfasst die Bearbeitungs- und/oder Fertigungsanlage insbesondere eine Bedienoberfläche mit wenigstens einem Bedienelement. Mittels des wenigstens einen Bedienelements lässt sich die Bearbeitungs- und/oder Fertigungsanlage insbesondere manuell steuern, um beispielsweise den Bearbeitungsprozess zu starten oder zu beenden. Die Bearbeitungs- und/oder Fertigungsanlage ist insbesondere eine CNC-Maschine.

Vorzugsweise öffnet die Automationseinheit vor dem Durchführen des Belade- und/oder Entladevorgangs das Beladefenster und schließt nach dem Durchführen des Belade- und/oder Entladevorgangs das Beladefenster. Insbesondere wird das Beladefenster geöffnet, bevor der Türschalter unterbrochen wird. Insbesondere wird das Beladefenster geschlossen, bevor der Türschalter wieder geschlossen wird.

Das Öffnen des Beladefensters und das Unterbrechen des Türschalters kann auch in umgekehrter Reihenfolge oder gleichzeitig erfolgen. Ebenso können das Schließen des Beladefensters und das Schließen des Türschalters in umgekehrter Reihenfolge oder gleichzeitig erfolgen. Das Durchführen des Belade- und/oder Entladevorgangs erfolgt hingegen erst, nachdem sowohl das Beladefenster geöffnet als auch der Türschalter unterbrochen wurde. Das Schließen des Beladefensters und das Schließen des Türschalters erfolgt insbesondere erst, nachdem der Belade- und/oder Entladevorgang abgeschlossen wurde.

Vorzugsweise erfolgt das Unterbrechen des Türschalters der Hauptzugangstür, indem die Automationseinheit einen Tür-Aktor ansteuert, um die Hauptzugangstür um einen Spalt zu öffnen, wobei der Spalt weit genug ist, damit der Türschalter der Hauptzugangstür unterbrochen wird, wobei das Schließen des Türschalters erfolgt, indem die Automationseinheit den Tür-Aktor ansteuert, um die Hauptzugangstür zu schließen. Durch Öffnen der Hauptzugangstür wird auf einfache Weise der Türschalter unterbrochen, um zu verhindern, dass ein Bearbeitungsprozess während des Ladevorgangs gestartet wird. Der Spalt muss lediglich weit genug sein, um den Türschalter zu unterbrechen. Indem die Hauptzugangstür lediglich um den Spalt geöffnet wird, wird gleichzeitig sichergestellt, dass ein Nutzer keinen Zugang zu dem Innenraum der Bearbeitungs- und/oder Fertigungsanlage erlangen kann, wodurch eine Verletzung durch die Ladeeinheit ausgeschlossen wird. Somit wird gleichzeitig zum Unterbinden eines Starts des Bearbeitungsprozesses verhindert, dass die Hauptzugangstür so weit geöffnet werden kann, dass ein Werker durch den Türspalt hineingreifen kann. Auf diese Weise wird auch ein Verletzungsrisiko des Werkers durch den Beladevorgang ausgeschlossen.

Der Tür-Aktor umfasst insbesondere wenigstens ein Translationselement und wenigstens ein Verriegelungselement. Das Translationselement ist insbesondere ein auslenkbarer Zylinder, insbesondere ein doppelwirkender Zylinder. Das Verriegelungselement ist insbesondere ein auslenkbarer Zylinder oder ein Elektromagnet. Unter dem Begriff Zylinder wird in dieser Beschreibung ein auslenkbarer längserstreckter Körper bzw. Linearaktor verstanden, der zur Translation und/oder Verriegelung einer Tür geeignet ist. Der Zylinder muss nicht notwendigerweise zylinderförmig sein.

Die Bearbeitungs- und/oder Fertigungsanlage umfasst insbesondere eine Türverrieglung zum Verriegeln der Hauptzugangstür im verschlossenen Zustand. Durch die Türverrieglung wird beispielsweise sichergestellt, dass ein Benutzer die Hauptzugangstür nicht während eines Bearbeitungsvorgangs öffnen kann. Insbesondere entriegelt die Bearbeitungs- und/oder Fertigungsanlage die Hauptzugangstür, bevor die Automationseinheit den Tür-Aktor ansteuert, um die Hauptzugangstür um den Spalt zu öffnen. Würde die Hauptzugangstür nicht entriegelt, könnte der Tür-Aktor die Hauptzugangstür nicht öffnen. Das Entriegeln der Hauptzugangstür durch die Bearbeitungs- und/oder Fertigungsanlage erfolgt insbesondere nach dem Betätigen des Startsignals.

Insbesondere ist der Spalt schmal genug, dass ein Innenraum der Bearbeitungs- und/oder Fertigungsanlage für einen Benutzer unzugänglich ist. Beispielsweise ist eine Breite des Spalts so gewählt, dass ein Benutzer nicht mit einem Finger oder einer Hand in den Innenraum hineingreifen kann. Je nach Ausgestaltung der Hauptzugangstür kann es möglich sein, dass trotz des Öffnens um einen Spalt noch kein Zugriff auf den Innenraum der Bearbeitungs- und/oder Fertigungsanlage besteht. Dies ist beispielsweise der Fall, wenn die Hauptzugangstür und ein Rahmen der Bearbeitungs- und/oder Fertigungsanlage über eine gewisse Distanz überlappen und beim Öffnen der Hauptzugangstür diese zunächst um die überlappende Distanz verschoben werden muss, bevor der Benutzer Zugang zum Innenraum erlangen kann.

Bevorzugt ist der Spalt der Spalt 5 mm bis 100 mm, insbesondere 5 mm bis 40 mm, breit. Eine solche Breite des Spalts ist sinnvoll, um einerseits den Türschalter zu unterbrechen und andererseits einen Zugang auf den Innenraum der Bearbeitungs- und/oder Fertigungsanlage zu verhindern.

Vorzugsweise steuert die Automationseinheit den Tür-Aktor an, um die Hauptzugangstür zu verriegeln, nachdem die Hauptzugangstür um den Spalt geöffnet wurde, wobei die Automationseinheit den Tür-Aktor ansteuert, um die Hauptzugangstür zu entriegeln, bevor die Hauptzugangstür geschlossen wird. Das Verriegeln der Hauptzugangstür, während diese um den Spalt geöffnet ist, erhöht die Sicherheit, da ein Nutzer die Hauptzugangstür in diesem Zustand weder schließen noch weiter öffnen kann. Somit wird die Hauptzugangstür insbesondere in der um einen Spalt geöffneten Position verriegelt.

Vorzugsweise wird der Tür-Aktor mittels eines Kopplungselements mit der Hauptzugangstür gekoppelt, bevor die Hauptzugangstür um den Spalt geöffnet wird, wobei insbesondere der Tür-Aktor mittels des Kopplungselements von der Hauptzugangstür entkoppelt wird, nachdem die Hauptzugangstür wieder geschlossen wird. Das Kopplungselement kann beispielsweise einer der Zylinder, ein Aktor oder ein Elektromagnet sein. Durch das Kopplungselement wird erreicht, dass der Tür-Aktor nur während des automatisierten Ladevorgangs mit der Hauptzugangstür gekoppelt ist und bei einer manuellen Beladung das Öffnen der Hauptzugangstür nicht durch den Tür-Aktor verhindert wird.

Gemäß einer anderen Ausführungsform erfolgt das Unterbrechen des Türschalters der Hauptzugangstür, indem die Automationseinheit einen Zwischenschalter ansteuert, der den Türschalter unterbricht. In dieser Ausführungsform ist es nicht notwendig, die Hauptzugangstür um einen Spalt zu öffnen.

Vorzugsweise erfolgt das Auslösen des externen Startsignals durch die Bearbeitungs- und/oder Fertigungsanlage, insbesondere nachdem die Bearbeitungs- und/oder Fertigungsanlage einen vorangehenden Bearbeitungsprozess abgeschlossen hat. Mit dem vorangehenden Bearbeitungsprozess wird insbesondere ein vorangehendes Werkstück hergestellt, das anschließend aus der Bearbeitungs- und/oder Fertigungsanlage entnommen werden muss. Nachdem das vorangehende Werkstück hergestellt wurde, löst die Bearbeitungs- und/oder Fertigungsanlage das Startsignal aus, um auf diese Weise der Automationseinheit zu signalisieren, dass der Ladevorgang gestartet werden soll, um das fertige Werkstück zu entnehmen und ein nächstes Werkstück und/oder Material und/oder Werkstückträger für ein nächstes Werkstück zuzuführen. Bei einer Serienfertigung von mehreren Werkstücken wird der allererste Bearbeitungsprozess insbesondere durch ein Startprogramm der Bearbeitungs- und/oder Fertigungsanlage ausgeführt. Dieser allererste Bearbeitungsprozess wird somit nicht wie die übrigen Bearbeitungsprozesse der Serienfertigung automatisch nach Abschluss des vorherigen Bearbeitungsprozesses gestartet, sondern durch das Startprogramm.

Vorzugsweise erfolgt das Auslösen des externen Startsignals durch eine mechanische Betätigung eines Ladevorgangsschalters im Innenraum der Bearbeitungs- und/oder Fertigungsanlage, wobei die mechanische Betätigung insbesondere durch ein Werkzeug der Bearbeitungs- und/oder Fertigungsanlage erfolgt. Das externe Startsignal ist insbesondere ein Infrarotsignal. Gemäß einer anderen Ausführungsform wird das externe Startsignal kabelgebunden oder per Funksignal von dem Ladevorgangsschalter an die Automationseinheit übermittelt. Der Ladevorgangsschalter kann beispielsweise ein Sensor sein, der im Innenraum der Bearbeitungs- und/oder Fertigungsanlage platziert ist. Beispielsweise ist der Sensor ein Infrarotsensor. Dieser wird insbesondere gezielt von der Bearbeitungs- und/oder Fertigungsanlage angefahren, um das externe Startsignal auszulösen. Gemäß einer anderen Ausführungsform ist der Ladevorgangsschalter ein Sicherheitsschalter, insbesondere ein Näherungssensor, der auf einer Maschinenachse der Bearbeitungs- und/oder Fertigungsanlage angebracht ist, wobei die Bearbeitungs- und/oder Fertigungsanlage durch Anfahren des Sicherheitsschalters das externe Startsignal auslöst. Die Position des Ladevorgangsschalters ist insbesondere so gewählt, dass in einem normalen Bearbeitungsprozess diese Position nicht angefahren wird. Das Auslösen des externen Startsignals durch die mechanische Betätigung erfolgt insbesondere als Teil eines Programms der Bearbeitungs- und/oder Fertigungsanlage, insbesondere als Teil eines Bearbeitungsprozesses oder Startprogramms.

Insbesondere startet die Automationseinheit einen nächsten Bearbeitungsprozess nach dem Schließen des Beladefensters und nach dem Schließen des Türschalters der Hauptzugangstür. Vorzugsweise betätigt die Automationseinheit nach dem Schließen des Beladefensters und nach dem Schließen des Türschalters der Hauptzugangstür einen Startschalter der Bearbeitungs- und/oder Fertigungsanlage, um den nächsten Bearbeitungsvorgang zu starten. Somit wird der gesamte Fertigungsprozess automatisiert, indem nach dem Abschluss des Ladevorgangs und dem Schließen des Beladefensters und des Türschalters durch die Automationseinheit der nächste Bearbeitungsvorgang in der Bearbeitungs- und/oder Fertigungsanlage gestartet wird.

Bevorzugt steuert die Automationseinheit zum Betätigen des Startschalters der Bearbeitungs- und/oder Fertigungsanlage einen Start-Aktuator an, welcher mechanisch einen Startschalter der Bearbeitungs- und/oder Fertigungsanlage betätigt. Der Startschalter ist insbesondere auf der Bedienoberfläche der Bearbeitungs- und/oder Fertigungsanlage angeordnet. Der Start-Aktuator wird von der Automationseinheit kontrolliert. Insbesondere ist der Start-Aktuator so angeordnet, dass er nach Aktivierung ausgelenkt wird und dabei den Startschalter der Bearbeitungs- und/oder Fertigungsanlage betätigt.

Die Aufgabe wird zudem gelöst durch ein System zum automatischen Beladen und/oder Entladen einer Bearbeitungs- und/oder Fertigungsanlage mittels einer Automationseinheit, umfassend die Bearbeitungs- und/oder Fertigungsanlage und die Automationseinheit, wobei die Bearbeitungs- und/oder Fertigungsanlage eine Hauptzugangstür zur manuellen Beladung der Bearbeitungs- und/oder Fertigungsanlage umfasst, wobei die Bearbeitungs- und/oder Fertigungsanlage und die Automationseinheit so zueinander angeordnet sind, dass die Bearbeitungs- und/oder Fertigungsanlage durch ein Beladefenster hindurch von der Automationseinheit beladbar und entladbar ist, wobei die Bearbeitungs- und/oder Fertigungsanlage dazu eingerichtet ist, ein externes Startsignal auszulösen und an die Automationseinheit zu übermitteln, wobei die Automationseinheit dazu eingerichtet ist, , einen Türschalter der Hauptzugangstür der Bearbeitungs- und/oder Fertigungsanlage zu unterbrechen, einen Belade- und/oder Entladevorgang der Bearbeitungs- und/oder Fertigungsanlage durch das Beladefenster mittels einer Ladeeinheit der Automationseinheit durchzuführen, und den Türschalter der Hauptzugangstür der Bearbeitungs- und/oder Fertigungsanlage wieder zu schließen. Die Automationseinheit ist somit dazu ausgebildet, nach Empfang des externen Startsignals die weiteren Prozessschritte auszuführen.

Das System verkörpert die gleichen Vorteile, Merkmale und Eigenschaften wie das zuvor beschriebene Verfahren zum automatischen Beladen- und/oder Entladen einer Bearbeitungs- und/oder Fertigungsanlage mittels einer Automationseinheit.

Vorzugsweise ist die Automationseinheit dazu ausgebildet, zur Unterbrechung des Türschalters der Hauptzugangstür einen Tür-Aktor anzusteuern, um die Hauptzugangstür um einen Spalt zu öffnen, wobei der Spalt weit genug ist, damit der Türschalter der Hauptzugangstür unterbrochen wird, wobei die Automationseinheit ferner dazu ausgebildet ist, zum Schließen des Türschalters den Tür-Aktor anzusteuern, um die Hauptzugangstür zu schließen.

Bevorzugt umfasst der Tür-Aktor wenigstens ein Translationselement und wenigstens ein Verriegelungselement, wobei das wenigstens eine Translationselement dazu ausgebildet ist, die Hauptzugangstür um den Spalt zu öffnen und zu schließen, wobei das wenigstens eine Verriegelungselement dazu ausgebildet ist, die Hauptzugangstür zu verriegeln, während die Hauptzugangstür um den Spalt geöffnet ist.

Der Tür-Aktor ist insbesondere kabelgebunden oder kabellos mit der Automationseinheit verbunden. Auf diese Weise kann die Automationseinheit den Tür-Aktor, der an der Hauptzugangstür der Bearbeitungs- und/oder Fertigungsanlage angeordnet ist, ansteuern.

Gemäß einer Ausführungsform umfasst der Tür-Aktor zwei vertikal angeordnete Zylinder, wobei ein erster Zylinder der zwei vertikal angeordneten Zylinder als Translationselement für die Öffnung der Hauptzugangstür und Verriegelungselement für die Verriegelung der Hauptzugangstür im geöffneten Zustand ausgebildet ist, wobei der zweite der zwei vertikal angeordneten Zylinder als Translationselement für das Schließen der Hauptzugangstür und Verriegelungselement für die Verriegelung der Hauptzugangstür im geschlossenen Zustand ausgebildet ist. Die Zylinder sind insbesondere Linearaktoren. Gemäß einer Ausführungsform sind die Zylinder Pneumatikzylinder, die pneumatisch ausgelenkt werden. Gemäß einer anderen Ausführungsform sind die Zylinder elektrisch angetriebene Zylinder. Die zwei Zylinder umfassen insbesondere jeweils eine Rolle, die durch Auslenkung der Zylinder auf einer Rampenfläche der Hauptzugangstür abläuft, um die vertikale Bewegung der Zylinder in einer horizontalen Bewegung der Hauptzugangstür umzusetzen. Im ausgelenkten Zustand blockieren die Zylinder dann eine horizontale Bewegung in der Gegenrichtung, um so die Hauptzugangstür zu verriegeln.

Die Begriffe "horizontal" und "vertikal" beziehen sich im Rahmen dieser Beschreibung auf die Richtungen der Bearbeitungs- und/oder Fertigungsanlage, wenn diese auf einem ebenen Boden steht.

Gemäß einer weiteren Ausführungsform umfasst der Tür-Aktor einen horizontal angeordneten Zylinder und einen vertikal angeordneten Zylinder, wobei der horizontal angeordnete Zylinder als Translationselement und der vertikal angeordnete Zylinder als Kopplungselement ausgebildet sind. Der horizontal angeordnete Zylinder ist insbesondere doppelwirkend. Zunächst koppelt der vertikal angeordnete Zylinder den horizontal angeordneten Zylinder mit der Hauptzugangstür. Anschließend öffnet und schließt der horizontal angeordnete Zylinder die Hauptzugangstür. Im gekoppelten Zustand bilden der vertikal und der horizontal angeordnete Zylinder zusammen das Verriegelungselement, um die Hauptzugangstür im geöffneten Zustand zu verriegeln.

Gemäß einer weiteren Ausführungsform umfasst der Tür-Aktor einen horizontal angeordneten Zylinder und einen Elektromagneten, wobei der horizontal angeordnete Zylinder als Translationselement und der Elektromagnet als Verriegelungselement ausgebildet sind. Der Elektromagnet ist insbesondere auch als Kopplungselement ausgebildet, das den horizontal angeordneten Zylinder mit der Hauptzugangstür koppelt. Wie in der zuvor genannten Ausführungsform wirkt der horizontal angeordnete Zylinder als Translationselement und ist insbesondere doppelwirkend. Die Verriegelung erfolgt hingegen durch einen Elektromagneten. Der Elektromagnet umfasst insbesondere jeweils einen Pol an dem Tür-Aktor und der Hauptzugangstür. Durch Aktivierung des Elektromagneten ziehen sich die Pole an, so dass durch die magnetische Kraftwirkung des Elektromagneten die Hauptzugangstür verriegelt wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Systems zur automatischen Beladung und/oder Entladung einer Bearbeitungs- und/oder Fertigungsanlage mittels einer Automationseinheit,
- Fig. 2: ein schematisch vereinfachtes Ablaufdiagramm eines Verfahrens zum automatischen Beladen und/oder Entladen einer Bearbeitungs- und/oder Fertigungsanlage mittels einer Automationseinheit,
- Fig. 3: Darstellung des Verfahrens aus Fig. 2 mit Aufteilung auf Schritte, die in der Bearbeitungs- und/oder Fertigungsanlage und in der Automationseinheit durchgeführt werden,
- Fig. 4: eine schematisch vereinfachte perspektivische Darstellung einer ersten Ausführungsform eines Tür-Aktors,
- Fig. 5: eine schematisch vereinfachte Querschnittsdarstellung des Tür-Aktors aus Fig. 4,
- Fig. 6: eine schematisch vereinfachte schematische Darstellung einer zweiten Ausführungsform eines Tür-Aktors,
- Fig. 7: eine schematisch vereinfachte perspektivische Darstellung einer dritten Ausführungsform eines Tür-Aktors aus einer ersten Perspektive und
- Fig. 8: eine schematisch vereinfachte perspektivische Darstellung des Tür-Aktors aus Fig. 7 aus einer zweiten Perspektive.

In den Zeichnungen sind jeweils gleiche oder gleichartige Elemente und/oder Teile mit denselben Bezugsziffern versehen, so dass von einer erneuten Vorstellung jeweils abgesehen wird.

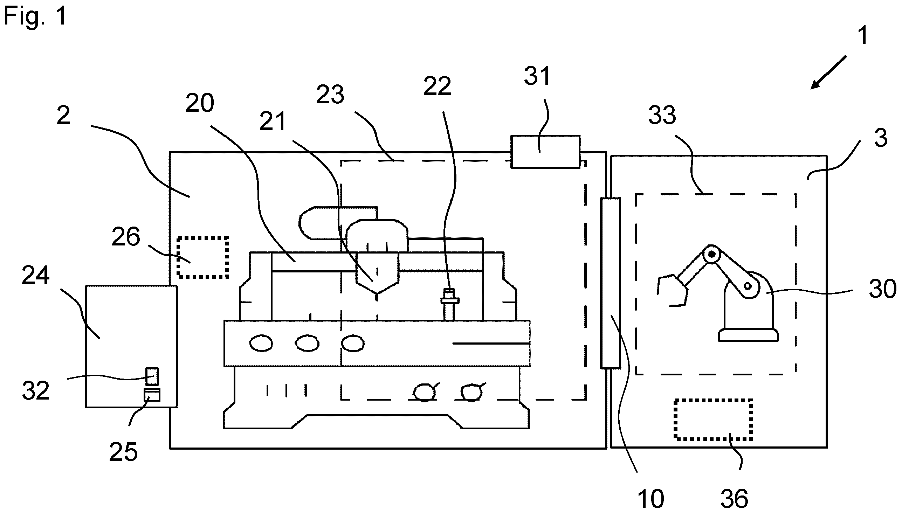

Fig. 1 zeigt schematisch vereinfacht ein System 1 zum automatischen Beladen und/oder Entladen einer Bearbeitungs- und/oder Fertigungsanlage 2 mittels einer Automationseinheit 3. Die Bearbeitungs- und/oder Fertigungsanlage 2 ist zur automatischen Fertigung von Werkstücken ausgebildet und umfasst dafür eine Werkzeugvorrichtung 20, die wenigstens ein Bearbeitungswerkzeug 21 aufweist, beispielsweise ein Bohr-, Schleif-, Schraub-, Schweiß- Klebe-, Fräs- oder Sägewerkzeug. Bei der gezeigten automatisierten Bearbeitungs- und/oder Fertigungsanlage Bearbeitungs- und/oder Fertigungsanlage2 handelt es sich um eine CNC-Maschine, die eine Steuerungsvorrichtung 26 umfasst, welche die Fertigung und/oder Bearbeitung des Werkstücks steuert. Um Zugang zu einem Innenraum der Bearbeitungs- und/oder Fertigungsanlage 2 zu erlangen, umfasst die Bearbeitungs- und/oder Fertigungsanlage 2 eine Hauptzugangstür 23, die manuell geöffnet werden kann. Dies erlaubt es einem Benutzer, fertige Werkstücke zu entnehmen und ein neues Werkstück oder neues Material der Bearbeitungs- und/oder Fertigungsanlage 2 zuzuführen. Über eine Bedienoberfläche 24 kann ein Benutzer die Bearbeitungs- und/oder Fertigungsanlage 2 steuern. Dafür umfasst die Bedienoberfläche 24 ein oder mehrere nicht gezeigte Bedienelemente, die es dem Benutzer ermöglichen, die Form, Zahl und Eigenschaften der zu fertigenden Werkstücke festzulegen.

Um den Zeitaufwand einer manuellen Be- und Entladung der Bearbeitungs- und/oder Fertigungsanlage 2 zu vermeiden, ist eine Automationseinheit 3 vorgesehen. Über ein Beladefenster 10, das von der Automationseinheit 3 angesteuert werden kann, hat eine Ladeeinheit 30 Zugang zu dem Innenraum der Bearbeitungs- und/oder Fertigungsanlage 2 und kann fertige Werkstücke entnehmen und neue Werkstücke bzw. Material und/oder Werkzeugträger hinzuführen. Die Ladeeinheit 30 ist beispielsweise ein Roboter oder eine ähnliche Vorrichtung zur Durchführung automatischer Ladevorgänge. Über eine Zugangstür 33 der Automationseinheit 3 kann ein Benutzer Zugang zum Innenraum der Automationseinheit 3 erlangen, um beispielsweise neues Material hinzuzufügen oder am Ende eines Herstellungszyklus sämtliche fertige Werkstücke zu entnehmen. Eine Steuerungsvorrichtung 36 der Automationseinheit 3 steuert die Ladeeinheit 30 und das Beladefenster sowie einen Tür-Aktor 31 und einen Start-Aktuator 32 an.

Der Tür-Aktuator 31 ist an der Hauptzugangstür 23 der Bearbeitungs- und/oder Fertigungsanlage 2 vorgesehen. Mittels des Tür-Aktors 31 lässt sich die Hauptzugangstür 23 um einen Spalt öffnen und in dieser Position verriegeln. Durch Öffnen der Hauptzugangstür 23 um einen Spalt wird ein Sicherheitsmechanismus bzw. eine Sicherheitsschaltung der Bearbeitungs- und/oder Fertigungsanlage 2 ausgelöst, die ein Starten eines Bearbeitungsprozesses der Bearbeitungs- und/oder Fertigungsanlage 2 verhindert. Dies dient in der Regel dazu, bei einer geöffneten Hauptzugangstür 23 zu verhindern, dass ein Nutzer durch die Werkzeugvorrichtung 20 verletzt wird, wenn er während eines Bearbeitungsprozesses versucht, in die Bearbeitungs- und/oder Fertigungsanlage 2 hineinzugreifen. Im vorliegenden Fall wird der gleiche Sicherheitsmechanismus der Bearbeitungs- und/oder Fertigungsanlage 2 ausgenutzt, um zu verhindern, dass der Bearbeitungsprozess gestartet wird, während die Ladeeinheit 30 den Ladevorgang durchführt.

Nachdem der Ladevorgang abgeschlossen ist und die Hauptzugangstür 23 sowie das Beladefenster 10 wieder geschlossen sind, steuert die Automationseinheit 3 den Start-Aktuator 32 an, der auf einen Startschalter 25 der Bearbeitungs- und/oder Fertigungsanlage 2 einwirkt, um den nächsten Bearbeitungsprozess zu starten. Die Bearbeitungs- und/oder Fertigungsanlage 2 stellt daraufhin ein neues Werkstück her. Ist die Bearbeitungs- und/oder Fertigungsanlage 2 damit fertig, fährt sie einen Ladevorgangsschalter 22 an, der sich im Innenraum der Bearbeitungs- und/oder Fertigungsanlage 2 befindet. Dadurch wird ein Startsignal ausgelöst, das, beispielsweise mittels Infrarot, an die Automationseinheit 3 übertragen wird, wodurch der nächste Ladevorgang eingeleitet wird.

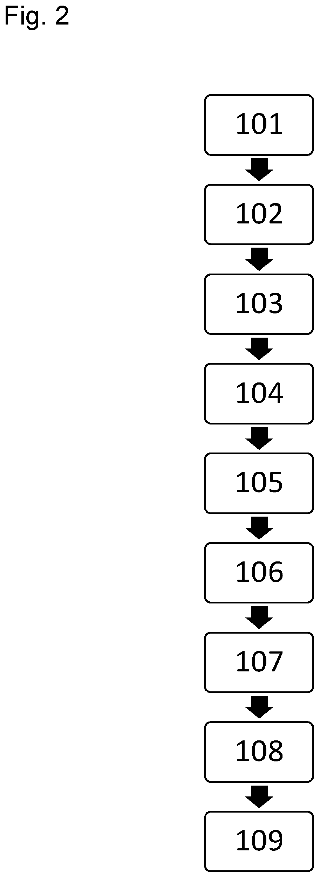

Fig. 2 zeigt schematisch vereinfacht ein Ablaufdiagramm eines beispielhaften Verfahrens zum automatischen Beladen und/oder Entladen einer Bearbeitungs- und/oder Fertigungsanlage 2 mittels einer Automationseinheit 3. In Schritt 101 schließt die Bearbeitungs- und/oder Fertigungsanlage 2 den Bearbeitungsprozess ab und stellt ein Werkstück fertig. Falls die Bearbeitungs- und/oder Fertigungsanlage 2 das erste Mal beladen werden soll, entfällt dieser Schritt. Anschließend löst die Bearbeitungs- und/oder Fertigungsanlage 2 in Schritt 102 das externe Startsignal aus, beispielsweise mittels des Ladevorgangsschalters 22, um das Startsignal an die Automationseinheit 3 zu übermitteln. In Schritt 103 wird das Beladefenster 10 geöffnet und in Schritt 104 der Tür-Aktor 31 angesteuert, um die Hauptzugangstür 23 um einen Spalt zu öffnen. In Schritt 105 führt die Ladeeinheit 30 anschließend den Belade- und/oder Entladevorgang durch. In Schritt 106 wird das Beladefenster 10 wieder geschlossen und in Schritt 107 die Hauptzugangstür 23 mittels des Tür-Aktors 31 geschlossen. In Schritt 108 betätigt der Start-Aktuator 32 den Startschalter 25, um ein Signal zum Start des Bearbeitungsprozesses an die Bearbeitungs- und/oder Fertigungsanlage 2 zu geben. In Schritt 109 beginnt die Bearbeitungs- und/oder Fertigungsanlage 2 anschließend mit einer automatischen Herstellung des nächsten Werkstücks. Falls nach dem Entladen keine weitere Bearbeitung mehr durchgeführt werden soll, entfallen die Schritte 108 und 109.

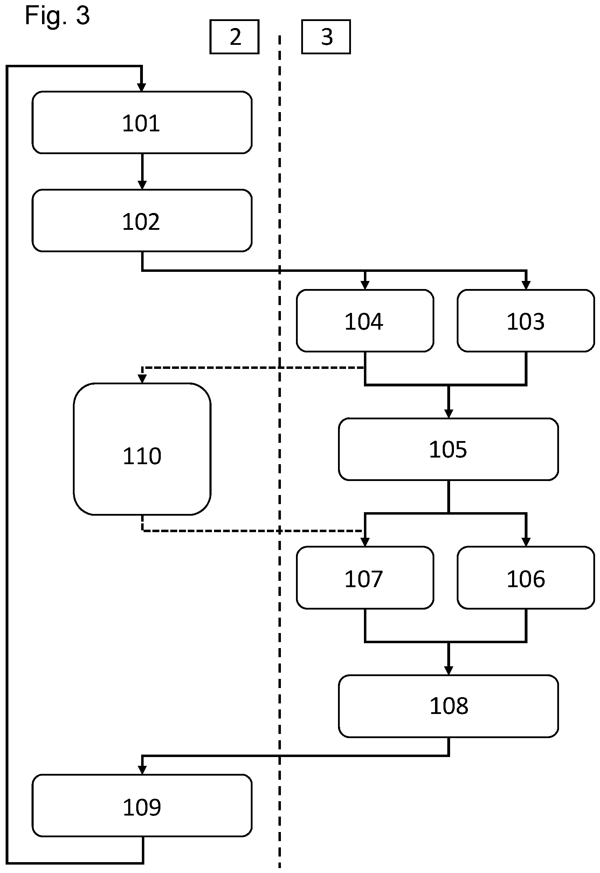

In Fig. 3 ist dargestellt, welche dieser Schritte von der auf der linken Seite gezeigten Bearbeitungs- und/oder Fertigungsanlage 2 und welche dieser Schritte von der auf der rechten Seiten gezeigten Automationseinheit 3 durchgeführt werden. Das Fertigstellen des Werkstücks in Schritt 101 und das Auslösen des externen Startsignals in Schritt 102 erfolgen noch durch die Bearbeitungs- und/oder Fertigungsanlage 2. Anschließend wird jedoch die Öffnung des Beladefensters 10 in Schritt 103 und das Öffnen der Hauptzugangstür 23 um einen Spalt in Schritt 104 durch die Automationseinheit 3 durchgeführt. Durch das Öffnen der Hauptzugangstür 23 um einen Spalt wird gemäß Schritt 110 der Türschalter der Hauptzugangstür 23 unterbrochen und ein Sicherheitskreis der Bearbeitungs- und/oder Fertigungsanlage 2 ausgelöst. Dies verhindert einerseits ein Starten der Bearbeitungs- und/oder Fertigungsanlage 2. Durch Verriegeln der Hauptzugangstür 23 in der um einen Spalt geöffneten Position wird zudem ein Hineingreifen in die Bearbeitungs- und/oder Fertigungsanlage 2 während des Ladevorgangs verhindert. Dieser Ladevorgang wird in Schritt 105 ebenfalls von der Automationseinheit 3 durchgeführt. Nach Abschluss des Ladevorgangs schließt die Automationseinheit 3 in Schritt 106 das Beladefenster 10 und in Schritt 107 die Hauptzugangstür 23. In Schritt 108 betätigt die Automationseinheit 3 anschließend den Startschalter 25, bevor die Bearbeitungs- und/oder Fertigungsanlage 2 mit der erneuten Bearbeitung eines Werkstücks in Schritt 109 beginnt und sich der Prozess wiederholt.

Die Reihenfolge, in der die Schritte 103 und 104 durchgeführt werden, ist austauschbar. Ebenso kann die Reihenfolge, in der die Schritte 106 und 107 durchgeführt werden, ausgetauscht werden. Genauso können die Schritte 103 und 104 parallel ablaufen. Auch die Schritte 106 und 107 können parallel ablaufen.

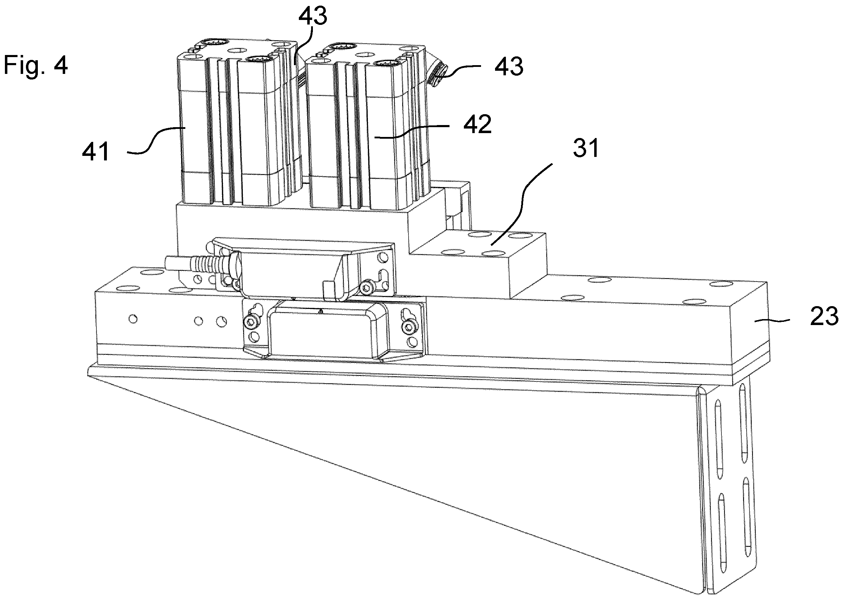

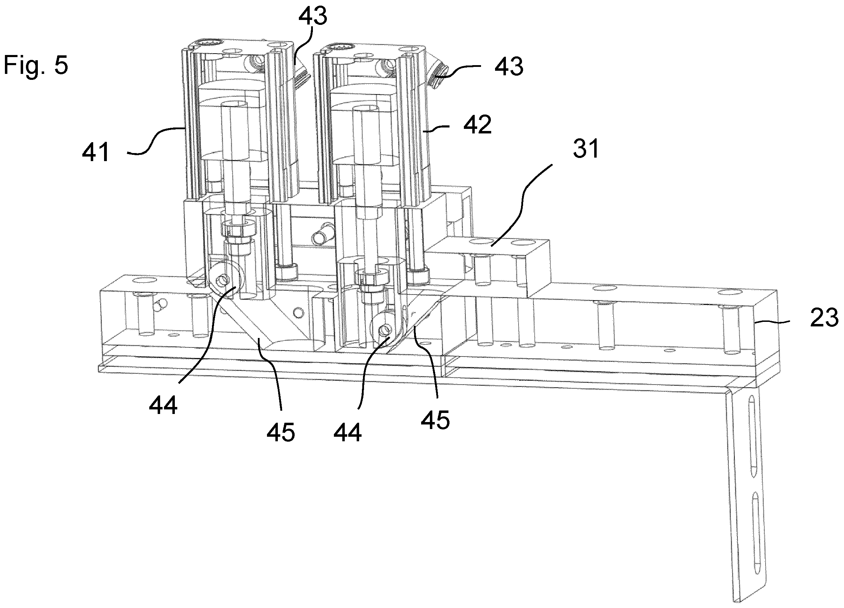

In den Fig. 4 und 5 ist eine erste Ausführungsform eines Tür-Aktors 31 gezeigt. Fig. 4 zeigt eine schematisch vereinfachte perspektivische Darstellung dieser ersten Ausführungsform, die zwei vertikal angeordnete Zylinder 41, 42 mit einem ersten Zylinder 41 und einem zweiten Zylinder 42 umfasst. Die Zylinder 41, 42 sind pneumatische Zylinder, die jeweils über einen Versorgungsanschluss 43 verfügen, um die Zylinder 41, 42 auszulenken. Wie in der Schnittdarstellung in Fig. 5 sichtbar, umfassen die Zylinder 41, 42 an ihrem unteren Ende jeweils eine Rolle 44, die durch Auslenkung der Zylinder 41, 42 auf einer Rampenfläche 45 der Hauptzugangstür 23 abrollt. Durch die Rampenfläche 45 wird die vertikale Bewegung der Zylinder 41, 42 in eine horizontale Bewegung umgesetzt, welche die Hauptzugangstür 23 öffnet oder schließt. Wird in Fig. 5 beispielsweise der erste Zylinder 41 ausgelöst, so bewegt sich dessen Rolle 44 entlang der Rampenfläche 45 nach unten, wodurch die Hauptzugangstür 23 in der Zeichenebene nach links bewegt wird. Im ausgelenkten Zustand des Zylinders 41 ist eine Bewegung der Hauptzugangstür 23 nach rechts nicht mehr möglich, da dies durch den ersten Zylinder 41 unterbunden wird. In diesem Zustand ist die Hauptzugangstür 23 somit durch den ersten Zylinder 41 verriegelt. Der zweite Zylinder 42 funktioniert analog, wobei die Bewegungsrichtung der Hauptzugangstür 23, die durch den zweiten Zylinder 42 hervorgerufen wird, entgegengesetzt ist. Bevor einer der Zylinder 41, 42 ausgelenkt wird, muss stets der andere Zylinder 41, 42 eingefahren werden, da ansonsten eine Bewegung der Hauptzugangstür 23 durch die durch den anderen Zylinder hervorgerufene Verriegelung verhindert wird.

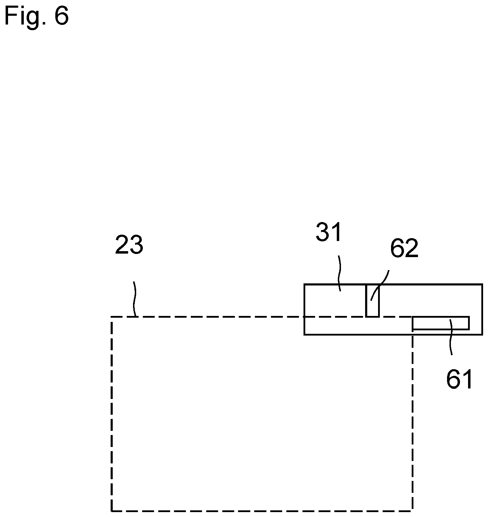

Fig. 6 zeigt eine schematisch vereinfachte Darstellung einer zweiten Ausführungsform eines Tür-Aktors 31. Dieser Tür-Aktor 31 umfasst einen horizontal angeordneten Zylinder 61 und einen vertikal angeordneten Zylinder 62. Der horizontal angeordnete Zylinder 61 wirkt als Translationselement, um die Hauptzugangstür 23 um den Spalt zu öffnen und wieder zu schließen. Der vertikal angeordnete Zylinder 62 wirkt als Kopplungselement, das den horizontal angeordneten Zylinder 61 mit der Hauptzugangstür 23 koppelt. Der horizontal angeordnete Zylinder 61 und der vertikal angeordnete Zylinder 62 zusammen bilden das Verriegelungselement, das die Hauptzugangstür 23 verriegelt, nachdem diese um einen Spalt geöffnet wurde.

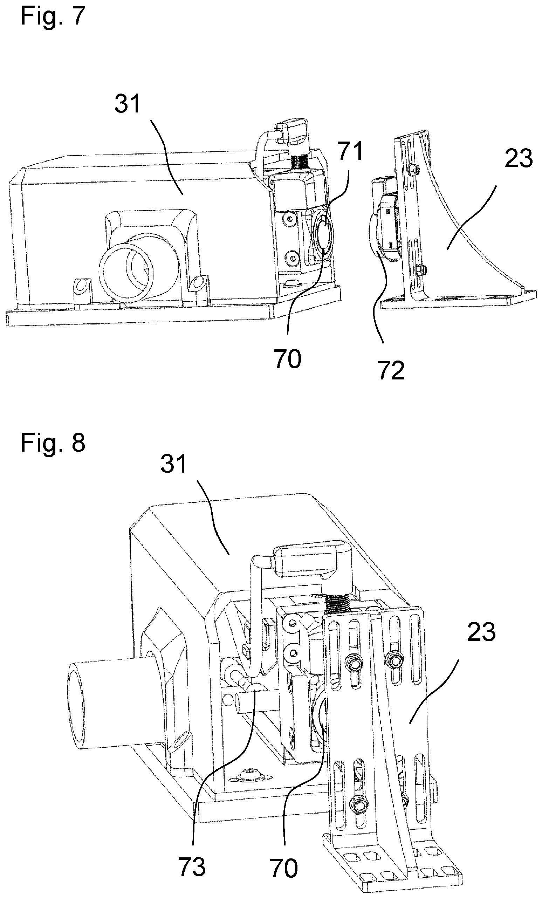

In den Fig. 7 und 8 sind jeweils perspektivisch vereinfachte Darstellungen einer dritten Ausführungsform eines Tür-Aktors 31 in unterschiedlichen Perspektiven dargestellt. Die dritte Ausführungsform umfasst als Verriegelungselement einen Elektromagneten 70, der einen ersten Magnetpol 71 und einen zweiten Magnetpol 72 aufweist. Der zweite Magnetpol 72 ist an der Hauptzugangstür 23 und der erste Magnetpol 71 an einem Hauptkörper des Tür-Aktors 31 angeordnet. Durch Aktivierung des Elektromagneten 70 ziehen sich die Magnetpole 71, 72 an, wodurch die Tür verriegelt wird. Zudem wirkt der Elektromagnet 70 als Kopplungselement, das den Tür-Aktor 31 mit der Hauptzugangstür 23 koppelt. Um die Tür zu öffnen oder zu schlie-ßen, umfasst die dritte Ausführungsform des Tür-Aktors 31 einen doppelwirkenden, horizontal angeordneten Zylinder 73, der in der Darstellung in Fig. 8 sichtbar ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: System
- 2: Bearbeitungs- und/oder Fertigungsanlage
- 3: Automationseinheit
- 10: Beladefenster
- 20: Werkzeugvorrichtung
- 21: Bearbeitungswerkzeug
- 22: Ladevorgangsschalter
- 23: Hauptzugangstür
- 24: Bedienoberfläche
- 25: Startschalter
- 26: Steuerungsvorrichtung
- 30: Ladeeinheit
- 31: Tür-Aktor
- 32: Start-Aktuator
- 33: Zugangstür
- 36: Steuerungsvorrichtung
- 41: erster Zylinder
- 42: zweiter Zylinder
- 43: Versorgungsanschluss
- 44: Rolle
- 45: Rampenfläche
- 61: horizontal angeordneter Zylinder
- 62: vertikal angeordneter Zylinder
- 70: Elektromagnet
- 71: Magnetpol
- 72: Magnetpol
- 73: horizontal angeordneter Zylinder
- 101 - 110: Schritte

## Patentansprüche

1. Verfahren zum automatischen Beladen und/oder Entladen einer Bearbeitungs- und/oder Fertigungsanlage (2) mittels einer Automationseinheit (3), wobei die Bearbeitungs- und/oder Fertigungsanlage (2) eine Hauptzugangstür (23) zur manuellen Beladung der Bearbeitungs- und/oder Fertigungsanlage (2) umfasst, wobei die Bearbeitungs- und/oder Fertigungsanlage (2) und die Automationseinheit (3) so zueinander angeordnet sind, dass die Bearbeitungs- und/oder Fertigungsanlage (2) durch ein Beladefenster hindurch von der Automationseinheit (3) beladbar und entladbar ist, wobei das Verfahren folgende Schritte umfasst:
- Auslösen eines externen Startsignals durch die Bearbeitungs- und/oder Fertigungsanlage (2) und Übermitteln des externen Startsignals an die Automationseinheit (3),
- Unterbrechen eines Türschalters der Hauptzugangstür (23) der Bearbeitungs- und/oder Fertigungsanlage (2) durch die Automationseinheit (3),
- Durchführen eines Belade- und/oder Entladevorgangs der Bearbeitungs- und/oder Fertigungsanlage (2) durch das Beladefenster (10) hindurch mittels einer Ladeeinheit der Automationseinheit (3),
- Schließen des Türschalters der Hauptzugangstür (23) der Bearbeitungs- und/oder Fertigungsanlage (2) durch die Automationseinheit (3).

2. Verfahren nach Anspruch 1, **dadurch gekennzeichnet, dass** die Automationseinheit (3) vor dem Durchführen des Belade- und/oder Entladevorgangs das Beladefenster (10) öffnet und nach dem Durchführen des Belade- und/oder Entladevorgangs das Beladefenster (10) schließt.

3. Verfahren nach Anspruch 1 oder 2, **dadurch gekennzeichnet, dass** das Unterbrechen des Türschalters der Hauptzugangstür (23) erfolgt, indem die Automationseinheit (3) einen Tür-Aktor (31) ansteuert, um die Hauptzugangstür (23) um einen Spalt zu öffnen, wobei der Spalt weit genug ist, damit der Türschalter der Hauptzugangstür (23) unterbrochen wird, wobei das Schließen des Türschalters erfolgt, indem die Automationseinheit (3) den Tür-Aktor (31) ansteuert, um die Hauptzugangstür (23) zu schließen.

4. Verfahren nach Anspruch 3, **dadurch gekennzeichnet, dass** der Spalt 5 mm bis 100 mm, insbesondere 5 mm bis 40 mm, breit ist.

5. Verfahren nach Anspruch 3 oder 4, **dadurch gekennzeichnet, dass** die Automationseinheit (3) den Tür-Aktor (31) ansteuert, um die Hauptzugangstür (23) zu verriegeln, nachdem die Hauptzugangstür (23) um den Spalt geöffnet wurde, wobei die Automationseinheit (3) den Tür-Aktor (31) ansteuert, um die Hauptzugangstür (23) zu entriegeln, bevor die Hauptzugangstür (23) geschlossen wird.

6. Verfahren nach einem der Ansprüche 3 bis 5, **dadurch gekennzeichnet, dass** der Tür-Aktor (31) mittels eines Kopplungselements mit der Hauptzugangstür (23) gekoppelt wird, bevor die Hauptzugangstür (23) um den Spalt geöffnet wird, wobei insbesondere der Tür-Aktor (31) mittels des Kopplungselements von der Hauptzugangstür (23) entkoppelt wird, nachdem die Hauptzugangstür (23) geschlossen wird.

7. Verfahren nach einem der Ansprüche 1 bis 6, **dadurch gekennzeichnet, dass** das Auslösen des externen Startsignals durch eine mechanische Betätigung eines Ladevorgangsschalters (22) im Innenraum der Bearbeitungs- und/oder Fertigungsanlage (2) erfolgt, wobei die mechanische Betätigung insbesondere durch ein Bearbeitungswerkzeug (21) der Bearbeitungs- und/oder Fertigungsanlage (2) erfolgt.

8. Verfahren nach einem der Ansprüche 1 bis 7, **dadurch gekennzeichnet, dass** nach dem Schließen des Beladefensters (10) und nach dem Schließen des Türschalters der Hauptzugangstür (23) die Automationseinheit (3) einen Startschalter (25) der Bearbeitungs- und/oder Fertigungsanlage (2) betätigt, um einen zweiten Bearbeitungsvorgang zu starten.

9. Verfahren nach Anspruch 8, **dadurch gekennzeichnet, dass** die Automationseinheit (3) zum Betätigen des Startschalters (25) der Bearbeitungs- und/oder Fertigungsanlage (2) einen Start-Aktuator (32) ansteuert, welcher mechanisch einen Startschalter (25) der Bearbeitungs- und/oder Fertigungsanlage (2) betätigt.

10. System zum automatischen Beladen und/oder Entladen einer automatisierten Bearbeitungs- und/oder Fertigungsanlage (2) mittels einer Automationseinheit (3), umfassend die Bearbeitungs- und/oder Fertigungsanlage (2) und die Automationseinheit (3), wobei die Bearbeitungs- und/oder Fertigungsanlage (2) eine Hauptzugangstür (23) zur manuellen Beladung der Bearbeitungs- und/oder Fertigungsanlage (2) umfasst, wobei die Bearbeitungs- und/oder Fertigungsanlage (2) und die Automationseinheit (3) so zueinander angeordnet sind, dass die Bearbeitungs- und/oder Fertigungsanlage (2) durch ein Beladefenster (10) hindurch von der Automationseinheit (3) beladbar und entladbar ist, wobei die Bearbeitungs- und/oder Fertigungsanlage (2) dazu eingerichtet ist, ein externes Startsignal auszulösen und an die Automationseinheit (3) zu übermitteln, wobei die Automationseinheit (3) dazu eingerichtet ist, einen Türschalter der Hauptzugangstür (23) der Bearbeitungs- und/oder Fertigungsanlage (2) zu unterbrechen, einen Belade- und/oder Entladevorgang der Bearbeitungs- und/oder Fertigungsanlage (2) durch das Beladefenster (10) mittels einer Ladeeinheit (30) der Automationseinheit (3) durchzuführen, und den Türschalter der Hauptzugangstür (23) der Bearbeitungs- und/oder Fertigungsanlage (2) wieder zu schließen.

11. System nach Anspruch 10, **dadurch gekennzeichnet, dass** die Automationseinheit (3) dazu ausgebildet ist, zur Unterbrechung des Türschalters der Hauptzugangstür (23) einen Tür-Aktor (31) anzusteuern, um die Hauptzugangstür (23) um einen Spalt zu öffnen, wobei der Spalt weit genug ist, damit der Türschalter der Hauptzugangstür (23) unterbrochen wird, wobei die Automationseinheit (3) ferner dazu ausgebildet ist, zum Schließen des Türschalters den Tür-Aktor (31) anzusteuern, um die Hauptzugangstür (23) zu schließen.

12. System nach Anspruch 11, **dadurch gekennzeichnet, dass** der Tür-Aktor (31) wenigstens ein Translationselement und wenigstens ein Verriegelungselement umfasst, wobei das wenigstens eine Translationselement dazu ausgebildet ist, die Hauptzugangstür (23) um den Spalt zu öffnen und zu schließen, wobei das wenigstens eine Verriegelungselement dazu ausgebildet ist, die Hauptzugangstür (23) zu verriegeln, während die Hauptzugangstür (23) um den Spalt geöffnet ist.

13. System nach Anspruch 12, **dadurch gekennzeichnet, dass** der Tür-Aktor (31) zwei vertikal angeordnete Zylinder (62) umfasst, wobei ein erster Zylinder (41) der zwei vertikal angeordnete Zylinder (62) als Translationselement für die Öffnung der Hauptzugangstür (23) und Verriegelungselement für die Verriegelung der Hauptzugangstür (23) im geöffneten Zustand ausgebildet ist, wobei der zweite der zwei vertikal angeordneten Zylinder (62) als Translationselement für das Schließen der Hauptzugangstür (23) und Verriegelungselement für die Verriegelung der Hauptzugangstür (23) im geschlossenen Zustand ausgebildet ist.

14. System nach Anspruch 12, **dadurch gekennzeichnet, dass** der Tür-Aktor (31) einen horizontal angeordneten Zylinder (61) und einen vertikal angeordneten Zylinder (62) umfasst, wobei der horizontal angeordnete Zylinder (61) als Translationselement und der vertikal angeordnete Zylinder (62) als Kopplungselement ausgebildet sind.

15. System nach Anspruch 12, **dadurch gekennzeichnet, dass** der Tür-Aktor (31) einen horizontal angeordneten Zylinder (61) und einen Elektromagneten (70) umfasst, wobei der horizontal angeordnete Zylinder (61) als Translationselement und der Elektromagnet (70) als Verriegelungselement ausgebildet sind.
